# EUROPEAN PATENT APPLICATION

(11) **EP 4 670 802 A1**
(43) Date of publication of application: **31.12.2025**
(21) Application number: 24201912.3
(22) Date of filing: 23.09.2024
(51) Int. Cl.: A63B 59/42, A63B 60/08, A63B 60/54, B29C 45/16, A63B 49/08, A63B 102/16, B29L 31/46, B29L 31/52, B29C 45/14

(54) **PRODUCTION PROCESS OF INTEGRALLY ENCAPSULATED RACKET**

(30) Priority: 24.06.2024 CN 202410820857
(71) Applicant: Dongguan Renchang Insulating Material Co., Ltd., Dongguan Guangdong 523000 (CN)
(72) Inventor: LIU, Jiuxian, Nanchang (CN)
(74) Representative: Metida

(57) **Abstract**

The present invention discloses a production process of an integrally encapsulated racket. The integrally encapsulated racket is provided. The integrally encapsulated racket includes a racket body (4), the racket body is externally wrapped with a wrapping surface (3), a plastic adhesive tape (5) is disposed at a connecting part between the wrapping surface and the racket body (4), the plastic adhesive tape (5) is attached to an edge of the racket body(4), a top end of the wrapping surface is in a same horizontal plane as a racket surface of the racket body, a handle sleeve (2) is injection molded at a bottom end of the racket body (4), and an inner side surface of the handle sleeve (2) is closely attached to the wrapping surface (3).

## Description

### CROSS-REFERENCE TO RELATED APPLICATIONS

The application claims priority to Chinese patent application No. 2024108208571, filed on June 24, 2024, the entire contents of which are incorporated herein by reference.

### TECHNICAL FIELD

The present invention relates to the field of Peak rackets and table tennis, and in particular to a production process of an integrally encapsulated racket.

### BACKGROUND

Outdoor sports are more and more popular among people, especially tennis played on a beach, a grassland and an outdoor venue. In the prior art, a racket is prepared by hot pressing with a mold, manually sticking a wrapping surface onto the racket, and then manually winding an adhesive tape around a handle of the racket to form a handle sleeve, thus forming a finished racket. However, the wrapping surface and the handle sleeve are prone to be separated during the use of the racket, which will easily lead to high wastage rate of the racket. Therefore, a production process of an integrally encapsulated racket is provided.

### SUMMARY

The present invention aims at providing a technical solution to solve the above problems.

A production process of an integrally encapsulated racket includes the integrally encapsulated racket, where the integrally encapsulated racket includes a racket body, the racket body is externally wrapped with a wrapping surface, the wrapping surface is closely attached to the racket body, a plastic adhesive tape is disposed at a connecting part between the wrapping surface and the racket body, the plastic adhesive tape is attached to an edge of the racket body, a top end of the wrapping surface is in a same horizontal plane as a racket surface of the racket body, a handle sleeve is injection molded at a bottom end of the racket body, the handle sleeve is closely attached to the racket body, and an inner side surface of the handle sleeve is closely attached to the wrapping surface;
the production process of the integrally encapsulated racket also includes the following steps:
S1, selecting a honeycomb board as a substrate and cutting the honeycomb board into a racket body;
S2, sealing an edge of a cutting surface of the racket body cut in S1 by an edge covering machine, and forming a plastic adhesive tape at an edge of the racket body, the plastic adhesive tape being closely attached to the edge of the racket body;
S3, placing the racket body with the edge sealed in S2 in an injection mold, wrapping, by the injection mold, the racket body with the edge of the racket body being exposed, and injecting the injection mold by an injection molding machine, so that a plastic covered edge is injection molded at the edge of the racket body, the top end of the plastic covered edge is in the same horizontal plane as the racket surface of the racket body and the plastic covered edge is integrated with the edge of the racket body;
S4, placing the handle of the racket body, which has finished the injection molding and edge covering in S3, in a racket handle molding mold, and injecting the racket handle molding mold by the injection molding machine, so that the handle sleeve is injection molded at the handle of the racket body, and the handle sleeve and the covered edge and the racket body are integrated, thereby forming a finished racket;
S5, further finish machining the finished racket in S4, and attaching a smooth cladding layer to the finished racket, where the smooth cladding layer wraps the racket body, and then the racket surface of the finished racket is protected by the smooth cladding layer.

Preferably, a fixing groove is formed between the handle sleeve and the racket body, the fixing groove is formed in an interior of the handle sleeve, a side surface at the bottom end of the racket body is closely attached to a groove wall of the fixing groove, and the wrapping surface is closely attached to the groove wall of the fixing groove.

Preferably, a convex edge and a conduit groove are disposed between the plastic adhesive tape and the racket body, the convex edge is formed at a side of the plastic adhesive tape, the conduit groove is formed at the edge of the racket body, the convex edge is inserted into the conduit groove, and the plastic adhesive tape is closely attached to the edge of the racket body through the cooperation between the convex edge and the conduit groove.

Preferably, glue is provided between the convex edge and the conduit groove, the glue is filled in the conduit groove, and the glue is adhered to the convex edge, so that the plastic adhesive tape is closely attached to the edge of the racket body.

Preferably, the smooth cladding layer is molded at the racket body, the smooth cladding layer wraps the racket body, the smooth cladding layer is in the same horizontal plane as the edge of the wrapping surface, and the wrapping surface and the smooth cladding layer are integrated, so that the racket surface of the racket body is protected by the smooth cladding layer.

Compared with the prior art, the present invention has the beneficial effects that the plastic adhesive tape and the racket body are wrapped by the wrapping surface, the wrapping surface is not prone to be separated from the racket body, and the wrapping surface is in the same horizontal plane as the racket surface of the racket body, so that a contact surface between the racket and a ball is wider; with the wrapping surface made of silica gel, the whole racket surface is elastic, and the elastic recovery of the racket surface is fast, so that the racket has the function of noise reduction when hitting the ball;
through the injection molded handle sleeve, the strength at the handle of the racket is enhanced, the handle sleeve is not prone to be separated from the racket, and the hand feel of the handle is enhanced and the handle is skin-friendly, so that an adhesive tape wound at the handle of the racket is replaced, a shock force generated by the impact between the racket and the ball when the racket hits the ball is damped and offset by the property of the material of the handle sleeve itself, and a hand of a user is not easily injured when using the racket;
through the plastic adhesive tape, the plastic cannot quickly enter the interior of the racket body when the wrapping surface is injection molded at the edge of the racket body, so that the racket body is prevented from bulging;
through the present invention, the efficiency of the whole racket body during production and assembly is higher, the speed of rubber coating and edge covering of the racket body is higher, the labor is saved, and the overall delivery efficiency is higher.

Additional aspects and advantages of the present invention will be set forth in part in the description which follows and, in part, will be obvious from the description, or may be learned by practice of the present invention.

### BRIEF DESCRIPTION OF DRAWINGS

In order to more clearly illustrate technical solutions in embodiments of the present invention or in the prior art, the accompanying drawings required to be used in the description of the embodiments or the prior art are introduced briefly as follows. Apparently, the accompanying drawings in the following description are only some embodiments of the present invention, and it will be understood by those ordinarily skilled in the art that other drawings can be obtained according to the accompanying drawings without creative efforts.
FIG. 1 is a structural schematic diagram of an integrally encapsulated racket;
FIG. 2 is a structural schematic diagram of a racket body;
FIG. 3 is another structural schematic diagram of the integrally encapsulated racket;
FIG. 4 is yet another structural schematic diagram of the integrally encapsulated racket;
FIG. 5 is an enlarged view at part A in FIG. 4; and
FIG. 6 is a schematic structural diagram of a plastic adhesive tape.

In the drawings: 1. smooth cladding layer; 2. handle sleeve; 3. wrapping surface; 4. racket body; 5. plastic adhesive tape; 6. fixing groove; 7. conduit groove, 8. convex edge; 9. glue.

### DETAILED DESCRIPTION OF THE EMBODIMENTS

The technical solutions of the embodiments of the present invention are clearly and completely described below with reference to the accompanying drawings in the embodiments of the present invention. Apparently, the described embodiments are merely some rather than all of the embodiments of the present invention. Based on the embodiments in the present invention, all other embodiments obtained by those of ordinary skill in the art without making creative labor fall within the scope of protection of the present invention.

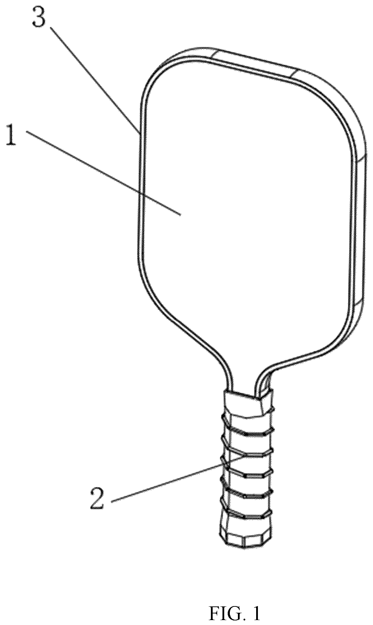

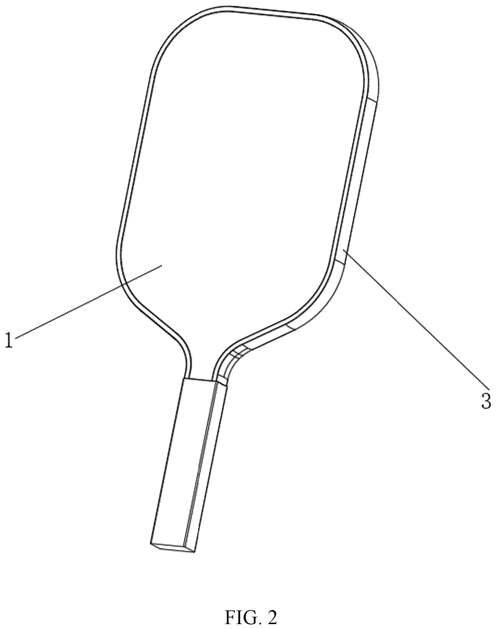

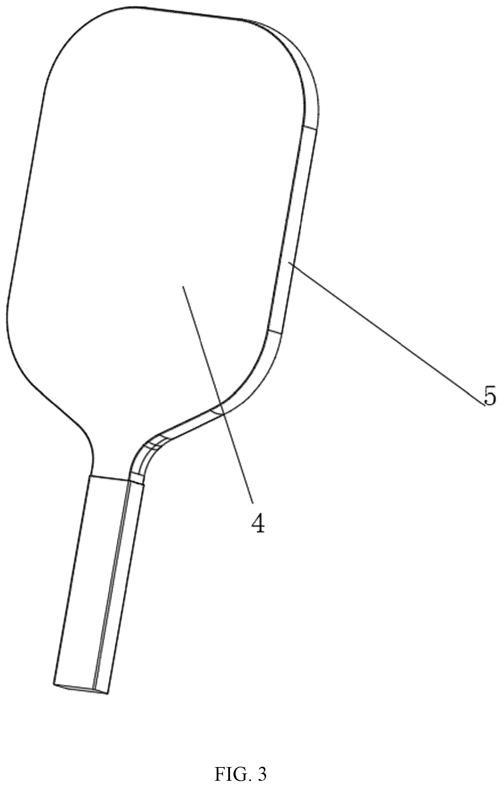

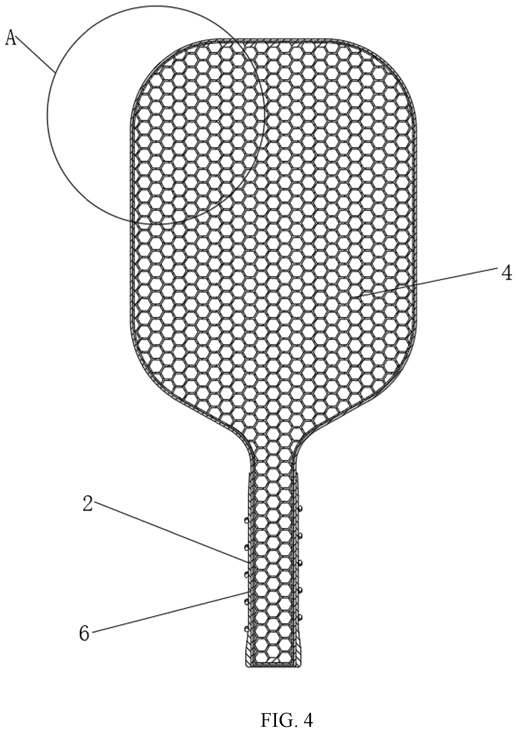

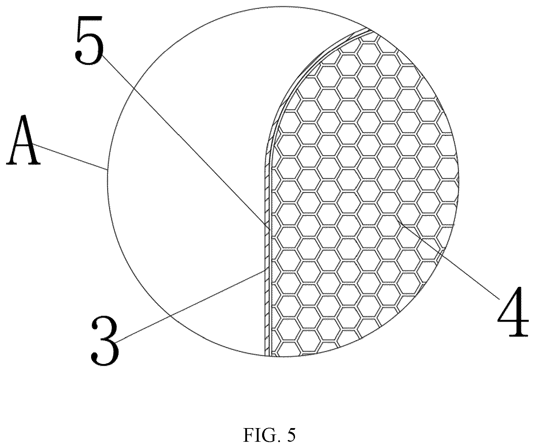

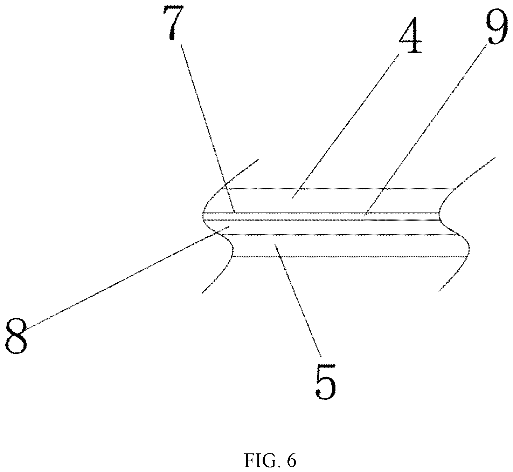

With reference to FIGs. 1-6, in an embodiment of the present invention, a production process of an integrally encapsulated racket includes the integrally encapsulated racket, where the integrally encapsulated racket includes a racket body 4, the racket body 4 is externally wrapped with a wrapping surface 3, the wrapping surface 3 is closely attached to the racket body 4, a plastic adhesive tape 5 is disposed at a connecting part between the wrapping surface 3 and the racket body 4, the plastic adhesive tape 5 is attached to an edge of the racket body 4, a top end of the wrapping surface 3 is in a same horizontal plane as a racket surface of the racket body 4, then the plastic adhesive tape 5 is wrapped by the wrapping surface 3, and through the plastic adhesive tape 5, plastic cannot quickly enter the racket body 4 when the wrapping surface 3 is wrapped outside the racket body 4 by injection molding, so that the racket body 4 is prevented from bulging; a handle sleeve 2 is injection molded at a bottom end of the racket body 4, the handle sleeve 2 is closely attached to the racket body 4, and an inner side surface of the handle sleeve 2 is closely attached to the wrapping surface 3, so that the strength at a handle of the racket body 4 is enhanced, the handle sleeve 2 is not prone to be separated from the racket body 4, and the hand feel of the handle is enhanced, thereby replacing an adhesive tape wound at the handle of the racket body 4;
the production process of the integrally encapsulated racket includes the following steps:
S1, selecting a honeycomb board as a substrate and cutting the honeycomb board into a racket body 4;
S2, sealing an edge of a cutting surface of the racket body 4 cut in S1 by an edge covering machine, and forming a plastic adhesive tape 5 at an edge of the racket body 1, the plastic adhesive tape 5 being closely attached to the edge of the racket body 1;
S3, placing the racket body 4 with the edge sealed in S2 in an injection mold, wrapping, by the injection mold, the racket body 4 with the edge of the racket body 4 being exposed, and injecting the injection mold by an injection molding machine, so that a plastic covered edge is injection molded at the edge of the racket body 4, the top end of the plastic covered edge is in the same horizontal plane as the racket surface of the racket body 4 and the plastic covered edge is integrated with the edge of the racket body 4;
S4, placing the handle of the racket body 4, which has finished the injection molding and edge covering in S3, in a racket handle molding mold, and injecting the racket handle molding mold by the injection molding machine, so that the handle sleeve 2 is injection molded at the handle of the racket body 4, and the handle sleeve 2 and the covered edge and the racket body 4 are integrated, thereby forming a finished racket;
S5, further finish machining the finished racket in S4, and attaching a smooth cladding layer 1 to the finished racket, where the smooth cladding layer 1 wraps the racket body 4, and then the racket surface of the finished racket is protected by the smooth cladding layer 1.
S5, further finish machining the finished racket in S4, and attaching a smooth cladding layer 1 to the finished racket, where the smooth cladding layer 1 wraps the racket body 4, and then the racket surface of the finished racket is protected by the smooth cladding layer 1.

A fixing groove 6 is formed between the handle sleeve 2 and the racket body 4, the fixing groove 6 is formed in an interior of the handle sleeve 2, a side surface at the bottom end of the racket body 4 is closely attached to a groove wall of the fixing groove 6, and the wrapping surface 3 is closely attached to the groove wall of the fixing groove 6.

A convex edge 8 and a conduit groove 7 are disposed between the plastic adhesive tape 5 and the racket body 4, the convex edge 8 is formed at a side of the plastic adhesive tape 5, the conduit groove 7 is formed at the edge of the racket body 4, the convex edge 8 is inserted into the conduit groove 7, and the plastic adhesive tape 5 is closely attached to the edge of the racket body 4 through the cooperation between the convex edge 8 and the conduit groove 7.

Glue 9 is provided between the convex edge 8 and the conduit groove 7, the glue 9 is filled in the conduit groove 7, and the glue 9 is adhered to the convex edge 8, so that the plastic adhesive tape 5 is closely attached to the edge of the racket body 4.

The smooth cladding layer 1 is molded at the racket body 4, the smooth cladding layer 1 wraps the racket body 4, the smooth cladding layer 1 is in the same horizontal plane as the edge of the wrapping surface 3, and the wrapping surface 3 and the smooth cladding layer 1 are integrated, so that the racket surface of the racket body 1 is protected by the smooth cladding layer 1.

It will be evident to those skilled in the art that the present disclosure is not limited to the details of the foregoing exemplary embodiments, and that the present disclosure may be embodied in other specific forms without departing from the spirit or essential features thereof. The present embodiments are therefore to be considered in all respects as illustrative and not restrictive, and the scope of the disclosure is indicated by the appended claims rather than by the foregoing description, and all changes which come within the meaning and range of equivalents of the claims are therefore intended to be embraced therein.

## Claims

1. A production process of an integrally encapsulated racket, **characterized by** comprising the integrally encapsulated racket, wherein the integrally encapsulated racket comprises a racket body, the racket body is externally wrapped with a wrapping surface, the wrapping surface is closely attached to the racket body, a plastic adhesive tape is disposed at a connecting part between the wrapping surface and the racket body, the plastic adhesive tape is attached to an edge of the racket body, a top end of the wrapping surface is in a same horizontal plane as a racket surface of the racket body, a handle sleeve is injection molded at a bottom end of the racket body, the handle sleeve is closely attached to the racket body, and an inner side surface of the handle sleeve is closely attached to the wrapping surface; and
the production process of the integrally encapsulated racket also comprises the following steps:
S1, selecting a honeycomb board as a substrate and cutting the honeycomb board into a racket body;
S2, sealing an edge of a cutting surface of the racket body cut in S 1 by an edge covering machine, and forming a plastic adhesive tape at an edge of the racket body, the plastic adhesive tape being closely attached to the edge of the racket body;
S3, placing the racket body with the edge sealed in S2 in an injection mold, wrapping, by the injection mold, the racket body with the edge of the racket body being exposed, and injecting the injection mold by an injection molding machine, so that a plastic covered edge is injection molded at the edge of the racket body, the top end of the plastic covered edge is in the same horizontal plane as the racket surface of the racket body and the plastic covered edge is integrated with the edge of the racket body;
S4, placing the handle of the racket body, which has finished the injection molding and edge covering in S3, in a racket handle molding mold, and injecting the racket handle molding mold by the injection molding machine, so that the handle sleeve is injection molded at the handle of the racket body, and the handle sleeve and the covered edge and the racket body are integrated, thereby forming a finished racket;
S5, further finish machining the finished racket in S4, and attaching a smooth cladding layer to the finished racket, wherein the smooth cladding layer wraps the racket body, and then the racket surface of the finished racket is protected by the smooth cladding layer.

2. The production process of the integrally encapsulated racket according to claim 1, **characterized in that** a fixing groove is formed between the handle sleeve and the racket body, the fixing groove is formed in an interior of the handle sleeve, a side surface at the bottom end of the racket body is closely attached to a groove wall of the fixing groove, and the wrapping surface is closely attached to the groove wall of the fixing groove.

3. The production process of the integrally encapsulated racket according to claim 1, **characterized in that** a convex edge and a conduit groove are disposed between the plastic adhesive tape and the racket body, the convex edge is formed at a side of the plastic adhesive tape, the conduit groove is formed at the edge of the racket body, the convex edge is inserted into the conduit groove, and the plastic adhesive tape is closely attached to the edge of the racket body through the cooperation between the convex edge and the conduit groove.

4. The production process of the integrally encapsulated racket according to claim 1, **characterized in that** glue is provided between the convex edge and the conduit groove, the glue is filled in the conduit groove, and the glue is adhered to the convex edge, so that the plastic adhesive tape is closely attached to the edge of the racket body.

5. The production process of the integrally encapsulated racket according to claim 1, **characterized in that** the smooth cladding layer is molded at the racket body, the smooth cladding layer wraps the racket body, the smooth cladding layer is in the same horizontal plane as the edge of the wrapping surface, and the wrapping surface and the smooth cladding layer are integrated, so that the racket surface of the racket body is protected by the smooth cladding layer.
